# EUROPÄISCHE PATENTSCHRIFT

(11) **EP 4 001 705 B1**
(45) Veröffentlichungstag und Bekanntmachung des Hinweises auf die Patenterteilung: **17.04.2024**
(21) Anmeldenummer: 21208332.3
(22) Anmeldetag: 15.11.2021
(51) Int. Cl.: F16H 63/34, F16H 63/30, F16H 57/02, F16H 57/023

(54) **PARKSPERRE, GETRIEBE UND ANTRIEBSEINRICHTUNG**
PARKING BRAKE, TRANSMISSION AND DRIVE DEVICE
SÉCURITÉ DE STATIONNEMENT, ENGRENAGE ET DISPOSITIF D'ENTRAÎNEMENT

(30) Priorität: 17.11.2020 DE 102020214420
(43) Veröffentlichungstag der Anmeldung: 25.05.2022
(73) Patentinhaber: Valeo eAutomotive Germany GmbH, 91056 Erlangen (DE)
(72) Erfinder: HAAS, Bernd, 91056 Erlangen (DE); SEEMANN, Patrick, 91056 Erlangen (DE); YIN, Runtian, 91056 Erlangen (DE)
(74) Vertreter: Valeo Powertrain Systems

(56) Entgegenhaltungen:
- EP-A1- 3 527 857
- WO-A1-2019/167993
- CN-A- 102 135 176
- CN-A- 104 019 227
- CN-A- 108 317 247
- CN-A- 110 425 277
- CN-A- 111 720 539
- CN-A- 111 810 631
- DE-A1-102014 117 731

## Beschreibung

Die Erfindung betrifft ein Getriebe mit einer Parksperre für ein Kraftfahrzeug, mit einem bewegbaren Arretierungsmittel zum Beaufschlagen eines im Inneren eines Getriebegehäuses angeordneten Parksperrenrads mit einer Haltekraft.

Parksperren, die auch als Parkbremsen bezeichnet werden, werden in steigendem Maße bei Kraftfahrzeugen eingesetzt. Ein bewegbares Arretierungsmittel wirkt dabei auf ein Parksperrenrad, das über Getriebekomponenten mit einem Rad des Kraftfahrzeugs verbunden ist. Im gesperrten Zustand blockiert die Parksperre das Rad des Kraftfahrzeugs.

Bei der in dem Dokument WO 2017/216230 A1 beschriebenen Parksperre sind ein Stößel und dessen Antrieb innerhalb eines Getriebegehäuses angeordnet. Der Stößel wirkt mit einem einseitig gelagerten Hebel zusammen, der einen Vorsprung aufweist, der durch eine Betätigung des Stößels in eine Ausnehmung eines Parksperrenrads geschwenkt werden kann.

Ein derartiger Aufbau ist allerdings aufwendig. Sowohl für das Innere des Getriebegehäuses als auch für die Außenseite wird jeweils ein separater Kabelbaum benötigt. Darüber hinaus muss verhindert werden, dass durch Druckunterschiede zwischen dem Inneren des Getriebegehäuses und der Parkbremse Getriebeöl in die Parkbremse, insbesondere in deren elektrischen Antrieb, eindringt. Allerdings entsteht durch eine derartige Ausgestaltung ein erhöhter baulicher Aufwand.

Aus Dokument CN108317247 A ist ein Parkmechanismus bekannt, der eine Nockenwelle antreibt, die von der Ausgangswelle eines Parkmotors angetrieben wird. Es ist auch bekannt, dass sich eine Sperrklinkenrücklaufwelle an einem Sperrklinkenkörper entlang einer speziell geformten Nut eines Nockenstücks bewegt.

Aus Dokument CN111810631 A ist auch ein Parkmechanismus bekannt, der ein Sperrrad, eine Sperrklinke, eine Sperrklinkenrückholkomponente, einen Verriegelungsmechanismus und einen Antriebsmechanismus umfasst.

Aus Dokument WO2019/167993A, auf welchem die zweiteilige Anspruchsfassung basiert, ist ein Parkmechanismus für ein Kraftfahrzeug bekannt, der ein bewegliches Verriegelungsmittel zum Aufbringen einer Haltekraft auf ein im Inneren eines Getriebegehäuses angeordnetes Parksperrenrad aufweist.

Der Erfindung liegt die Aufgabe zugrunde, ein Getriebe mit einer Parksperre für ein Kraftfahrzeug anzugeben, das einfach aufgebaut ist und eine zuverlässige Funktion im Zuge der Parksperre sicherstellt.

Zur Lösung dieser Aufgabe ist das Getriebe gemäß Anspruch 1 vorgesehen. Vorteilhafte Ausgestaltungen der Erfindung ergeben sich aus den abhängigen Ansprüchen.

Die Erfindung beruht auf der Erkenntnis, dass der Antrieb der Parksperre, insbesondere ein elektrischer Antrieb, besonders zuverlässig vor dem Eindringen von Getriebeöl geschützt werden kann, indem der Antriebsmotor außerhalb des Getriebegehäuses angeordnet ist. Die durch den Antriebsmotor angetriebene Schaltwelle erstreckt sich durch das Getriebegehäuse nach innen und trägt den verschwenkbaren Nocken. Dadurch wird lediglich ein einziger Kabelbaum benötigt, der außerhalb des Getriebegehäuses angeordnet ist. Eine separate Entlüftung der Parksperre ist nicht erforderlich. Die erfindungsgemäße Parksperre ist somit einfach aufgebaut und gewährleistet eine zuverlässige Funktion.

Gemäß der Erfindung ist die Schaltwelle von einer Torsionsfeder umgeben, die einerseits an der Schaltwelle und andererseits an dem Nocken befestigt ist. Beim Verschwenken der Schaltwelle von dem Freigabezustand in den gesperrten Zustand bewegt die Torsionsfeder den Nocken, der das Parksperrenrad blockiert. Das Drehmoment wird von der Schaltwelle über die Torsionsfeder auf den Nocken übertragen, wenn die Parksperre von der ungebremsten, inaktiven Position, d.h. dem Freigabezustand, in die gebremste Position, d.h. den gesperrten Zustand, bewegt wird. Der Nocken kann somit durch eine Drehung der Schaltwelle in eine (erste) Drehrichtung durch die Torsionsfeder von dem Freigabezustand in den gesperrten Zustand überführt werden.

Gemäß der vorliegenden Erfindung ist an der Schaltwelle ein Anschlag angeordnet. Der Anschlag ermöglich, dass der Nocken durch eine Drehung der Schaltwelle in die entgegengesetzte Drehrichtung von dem gesperrten Zustand in den Freigabezustand überführbar ist.

Im Rahmen der Erfindung kann es vorgesehen sein, dass der Nocken eine an den Außendurchmesser der Schaltwelle angepasste Durchgangsöffnung aufweist. Der Nocken ist somit separat von der Schaltwelle ausgebildet und zumindest abschnittsweise um die Schaltwelle herum drehbar. Der Nocken und die Schaltwelle sind über die Torsionsfeder miteinander gekoppelt.

Um einen besonders reibungsarmen Betrieb der Parksperre zu gewährleisten, kann es vorgesehen sein, dass die Schaltwelle durch ein Gleitlager oder ein Wälzlager am oder im Getriebegehäuse gelagert ist. Die Lagerung der Schaltwelle bewirkt eine Verringerung der Reibung und in der Folge einen reduzierten Antriebsbedarf des elektrischen Antriebs.

Eine Ausgestaltung der Erfindung sieht vor, dass die Schaltwelle gegenüber dem Getriebegehäuse durch ein Dichtungselement abgedichtet ist. Das Dichtungselement verhindert das Eindringen von Verschmutzungen in das Innere des Getriebegehäuses, gleichzeitig wird der Austritt von Getriebeöl durch das Getriebegehäuse nach außen verhindert.

Die hier beschriebene Parksperre kann eine besonders hohe Haltekraft aufbringen, wenn die Schaltwelle mit ihrem dem Antriebsmotor entgegengesetzten freien Ende im Getriebegehäuse gelagert ist. Vorzugsweise ist das freie Ende der Schaltwelle durch ein Wälzlager oder ein Gleitlager in einem Sackloch des Getriebegehäuses oder eines Getriebedeckels gelagert. Das freie Ende der Schaltwelle kann auch mit einer Distanzhülse versehen sein, wodurch die Schaltwelle in Axialrichtung positioniert wird.

Daneben betrifft die Erfindung eine Antriebseinrichtung für ein elektrisch antreibbares Kraftfahrzeug, umfassend eine elektrische Maschine, ein mit der elektrischen Maschine gekoppeltes Getriebe und eine Parksperre der beschriebenen Art.

Die Erfindung wird nachfolgend anhand von Ausführungsbeispielen einer Parksperre in einem erfindungsgemäßen Getriebe unter Bezugnahme auf die Zeichnungen erläutert. Die Zeichnungen sind schematische Darstellungen und zeigen:
- Fig. 1: die wesentlichen Komponenten einer Parksperre in einem Getriebegehäuse eines erfindungsgemäßen Getriebes;
- Fig. 2: eine axiale Ansicht der Parksperre bei blockiertem Parksperrenrad;
- Fig. 3: die in Fig. 2 gezeigte Parksperre im Freigabezustand;
- Fig. 4: eine vergrößerte Ansicht des auf der Schaltwelle angeordneten Nockens in Längsrichtung der Schaltwelle gesehen;
- Fig. 5: eine axiale Ansicht eines weiteren Ausführungsbeispiels einer Parksperre; und
- Fig. 6: eine axiale Ansicht eines weiteren Ausführungsbeispiels einer Parksperre.

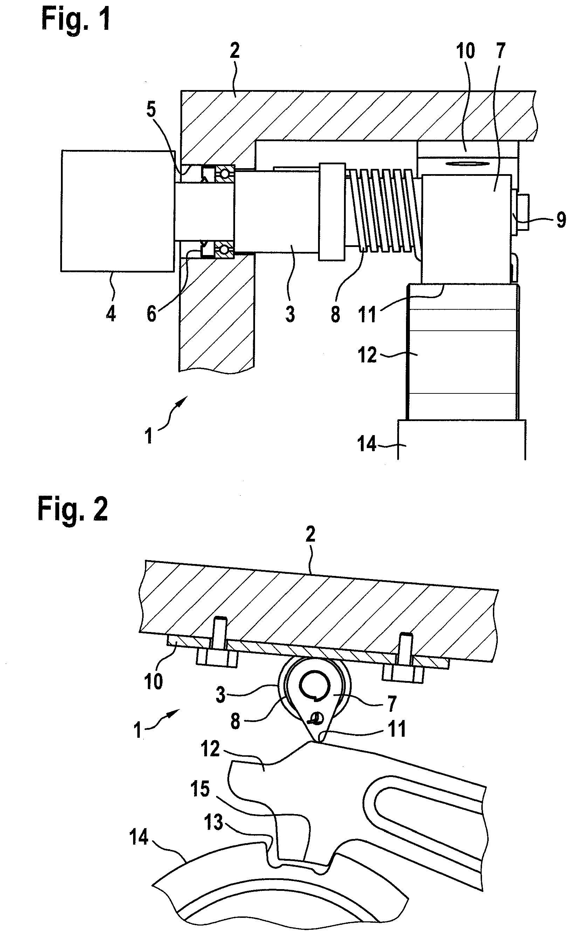

Fig. 1 zeigt eine Parksperre 1, die in einem Getriebegehäuse 2 angeordnet ist. Die Parksperre 1 umfasst eine Schaltwelle 3, die durch einen elektrischen Antriebsmotor 4 drehbar ist. Die Schaltwelle 3 ist dazu mit einer Antriebswelle des Antriebsmotors 4 gekoppelt. In Fig. 1 erkennt man, dass der elektrische Antriebsmotor 4 außerhalb des geschnitten dargestellten Getriebegehäuses 2 angeordnet ist. Die Schaltwelle 3 durchsetzt eine Öffnung 5 des Getriebegehäuses 2. Der größte Teil der Schaltwelle 3, abgesehen von dem unmittelbar an den elektrischen Antriebsmotor 4 angrenzenden Teil, ist innerhalb des Getriebegehäuses 2 angeordnet. Die Öffnung 5 ist durch ein Dichtungselement 6 abgedichtet. Das Dichtungselement 6 dichtet einen Ringraum zwischen der Öffnung 5 des Getriebegehäuses 2 und der Außenseite der Schaltwelle 3 ab.

Auf der Schaltwelle 3 ist ein Nocken 7 angeordnet, wobei die Schaltwelle 3 und der Nocken 7 als separate Komponenten ausgebildet sind. Der Nocken 7 weist eine Durchgangsöffnung auf, die an den Außendurchmesser der Schaltwelle 3 angepasst ist, sodass der Nocken 7 auf den Endabschnitt der Schaltwelle 3 geschoben werden kann. Die Schaltwelle 3 ist von einer Torsionsfeder 8 umgeben. Ein Ende der Torsionsfeder 8 (das in Fig. 1 linke Ende) stützt sich an der Schaltwelle 3 ab und ist an der Schaltwelle 3 befestigt. Das entgegengesetzte Ende der Torsionsfeder 8 (das in Fig. 1 rechte Ende) stützt sich an dem Nocken 7 ab und ist an dem Nocken 7 befestigt. Im Bereich ihres freien Endes weist die Schaltwelle 3 eine Scheibe 9 auf, die den Nocken 7 in Axialrichtung fixiert.

Fig. 2 zeigt die Parksperre 1 in einer axialen Ansicht, d. h. in Längsrichtung der Schaltwelle 3. An der Innenseite des Getriebegehäuses 2 befindet sich eine aus einer Stahllegierung hergestellte Platte 10. Die Platte 10 ist zwischen dem Nocken 7 und der Innenseite des Getriebegehäuses 2 angeordnet und liegt dem Nocken 7 gegenüber. Bei einer Drehung des Nockens 7 berührt dieser die Platte 10, d.h. der Nocken 7 wälzt sich auf der Platte 10 ab, er berührt jedoch nicht das Getriebegehäuse 2.

Fig. 2 zeigt den Nocken 7 näherungsweise in seiner maximal "ausgefahrenen" Stellung, in der sich die Spitze des Nockens 7 in seiner untersten Position befindet. Der Nocken 7 berührt mit seiner Spitze 11 ein bewegbares Arretierungsmittel, das als Sperrklinke ausgebildet ist. Ein Ende (nicht dargestellt) der Sperrklinke 12 ist schwenkbar gelagert. Die Sperrklinke 12 weist in der Nähe ihres freien Endes einen quer abstehenden Vorsprung 15 auf. Wenn der Nocken 7 die Sperrklinke 12 schwenkt, wird der Vorsprung 15 der Sperrklinke 12 gegen die Kraft einer Feder (nicht gezeigt) in eine Ausnehmung 13 eines Parksperrenrads 14 bewegt. Der Vorsprung 15 der Sperrklinke 12 blockiert in diesem Zustand eine Drehung des Parksperrenrads 14, das über ein Getriebe mit einem Rad des Kraftfahrzeugs gekoppelt ist. In dem in Fig. 2 gezeigten blockierten Zustand verhindert die Parksperre 1 eine Drehung des Rads des Kraftfahrzeugs. Eine Steuerungseinrichtung (nicht gezeigt) dient zur Steuerung des elektrischen Antriebsmotors 4, durch den die Schaltwelle 3 und in der Folge der Nocken 7 angetrieben werden.

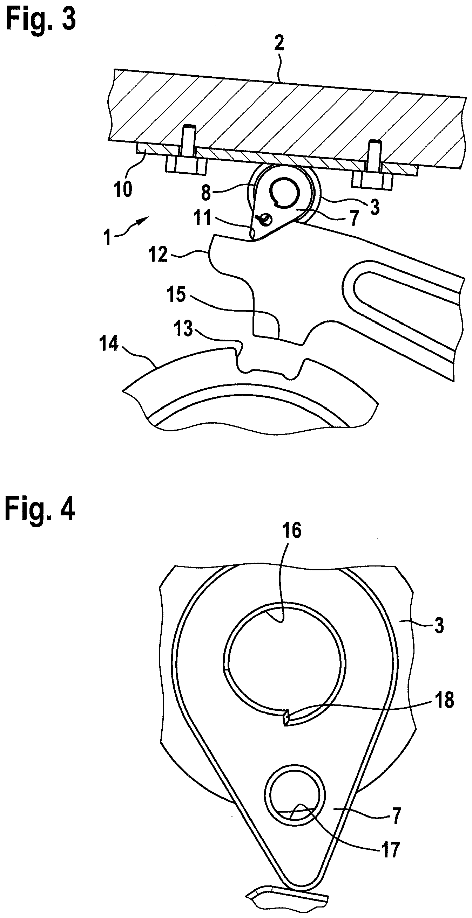

Fig. 3 ist eine ähnliche Ansicht wie Fig. 2 und zeigt die Parksperre 1 in einer axialen Ansicht, nachdem der Nocken 7 ausgehend von der in Fig. 1 gezeigten Position im Uhrzeigersinn gedreht worden ist. Die Spitze 11 des Nockens 7 gleitet dabei außenseitig entlang der Sperrklinke 12. Dadurch wird die Sperrklinke 12 unter der Wirkung der auf die Sperrklinke 12 wirkenden Feder von dem Parksperrenrad 14 weg in Richtung des Nockens 7 bewegt. In diesem Zustand befindet sich der Vorsprung 15 der Sperrklinke 12 außerhalb der Ausnehmung 13 des Parksperrenrads 14, sodass eine Drehung des Parksperrenrads 14 nicht mehr blockiert wird. Dementsprechend kann dann das mit dem Parksperrenrad 14 gekoppelte Rad des Kraftfahrzeugs bewegt werden.

Fig. 3 zeigt die Parksperre 1 somit im nicht aktiven Zustand (Freigabezustand), während Fig. 2 die Parksperre 1 im gesperrten Zustand zeigt, in dem eine Drehung des Parksperrenrads 14 blockiert ist. Ausgehend von dem in Fig. 3 gezeigten Zustand kann der Nocken 7 durch eine Drehung der Schaltwelle 3 gegen den Uhrzeigersinn von dem Freigabezustand in den gesperrten Zustand überführt werden. Die Schaltwelle 3 übertragt das Drehmoment dabei über die Torsionsfeder 8 an den Nocken 7.

Falls der Vorsprung 15 der Sperrklinke 12 sich dabei nicht oberhalb einer Ausnehmung 13 des Parksperrenrads 14 befindet, kann der Vorsprung nicht in die Ausnehmung bewegt werden, stattdessen liegt er dann auf dem Außenumfang des Parksperrenrads 1 auf. Das von der Schaltwelle 3 übertragene Drehmoment bewirkt dann, dass die Torsionsfeder 8 gespannt wird, d.h. in der Torsionsfeder 8 wird potenzielle Energie gespeichert. Wenn das Fahrzeug, in dem die Parksperre angeordnet ist, weiter rollt, dreht sich das Parksperrenrad 14. Unter der Wirkung der von der Torsionsfeder 8 erzeugten Vorspannkraft wird die Sperrklinke 12 dann in die nächste Ausnehmung 13 gedrückt, so dass sich die Parksperre 1 in dem gesperrten Zustand befindet.

Fig. 4 ist eine axiale Ansicht des Nockens 7, der sich auf der Schaltwelle 3 befindet. Man erkennt, dass der Nocken 7 eine Durchgangsöffnung 16 besitzt, die an den Außendurchmesser der Schaltwelle 3 in diesem Bereich angepasst ist. In eine zweite, kleinere Durchgangsöffnung 17 des Nockens 7 kann die Torsionsfeder 8 eingehängt werden. In Fig. 4 erkennt man, dass der Nocken 7 einen Anschlag 18 aufweist, sodass der Nocken 7 bei einer Drehung der Schaltwelle 3 im Uhrzeigersinn direkt, d.h. ohne Mitwirkung der Torsionsfeder 8, von dem gesperrten Zustand in den Freigabezustand überführt wird.

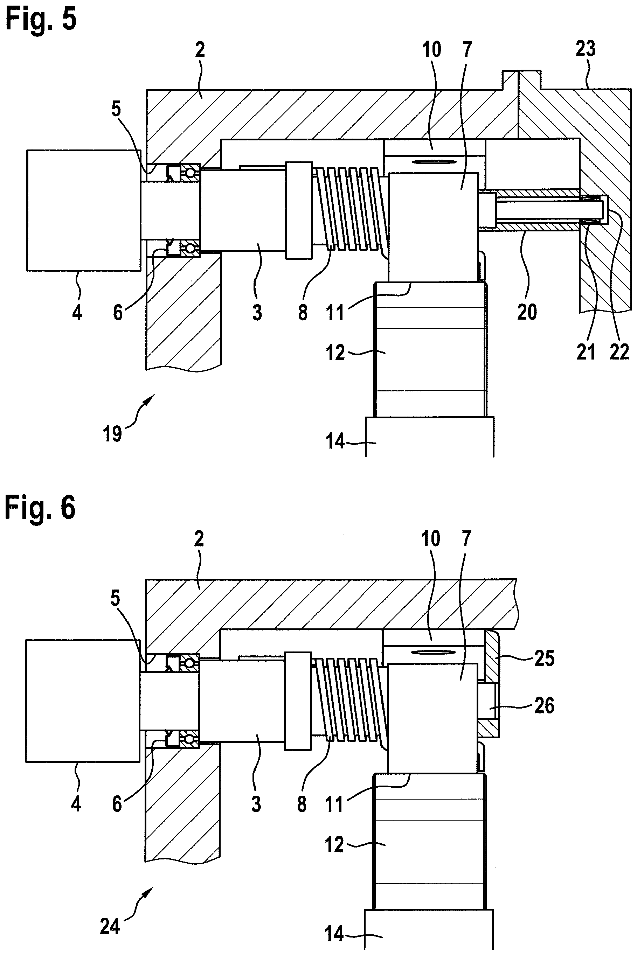

Fig. 5 ist eine teilweise geschnittene Ansicht und zeigt ein zweites Ausführungsbeispiel einer Parksperre 19, wobei identische Komponenten mit identischen Bezugszeichen bezeichnet werden. Die Parksperre 19 umfasst in Übereinstimmung mit dem ersten Ausführungsbeispiel die Schaltwelle 3, die das Getriebegehäuse 2 teilweise durchsetzt und die überwiegend in dem Getriebegehäuse 2 aufgenommen ist. Die Schaltwelle 3 wird durch den elektrischen Antriebsmotor 4 angetrieben. Der mit der Schaltwelle 3 gekoppelte Nocken 7 dient zum Blockieren der Sperrklinke 12 des Parksperrenrads 14. An dem in Fig. 5 rechten Ende der Schaltwelle 3 ist eine Abstandshülse 20 angeordnet, die mittels eines Lagers 21 in einem Sackloch 22 eines Getriebegehäusedeckels 23 gelagert ist. Durch diese Abstützung an ihrem dem Antrieb entgegengesetzten Ende kann die Schaltwelle 3 ein höheres Drehmoment übertragen.

Fig. 6 zeigt ein drittes Ausführungsbeispiel einer Parksperre 24, wobei wiederum identische Komponenten mit denselben Bezugszeichen wie in den vorangehenden Ausführungsbeispielen versehen sind. Die in dem Getriebegehäuse 2 aufgenommene Schaltwelle 3 ist an ihrem freien, in Fig. 6 rechten Ende in einer Platte 25 gelagert, die senkrecht zur Längsrichtung der Schaltwelle 3 angeordnet ist. Die Platte 25 ist an der Platte 10, die sich an der Innenseite des Getriebegehäuses 2 befindet, befestigt und weist eine kreisförmige Öffnung auf, in die ein Endabschnitt 26 der Schaltwelle 3 eingesetzt und gelagert ist. Durch diese Abstützung ist die Schaltwelle 3 in der Lage, ein höheres Drehmoment zu übertragen.

## Patentansprüche

1. Getriebe mit einer Parksperre (1, 19, 24) und einem Getriebegehäuse (2) für ein Kraftfahrzeug, mit einem bewegbaren Arretierungsmittel zum Beaufschlagen eines im Inneren des Getriebegehäuses (2) angeordneten Parksperrenrads (14) mit einer Haltekraft, wobei das bewegbare Arretierungsmittel mittels einer durch einen Antriebsmotor (4) drehbaren Schaltwelle (3) und einem mit der Schaltwelle (3) gekoppelten Nocken (7) zwischen einem Freigabezustand, in dem das Parksperrenrad (14) drehbar ist und einem gesperrten Zustand, in dem eine Drehung des Parksperrenrads (14) blockiert ist, verschwenkbar ist, wobei der Antriebsmotor (4) außerhalb des Getriebegehäuses (2) angeordnet ist, die Schaltwelle (3) das Getriebegehäuse (2) durchsetzt und der Nocken (7) innerhalb des Getriebegehäuses (2) angeordnet ist, wobei die Schaltwelle (3) von einer Torsionsfeder (8) umgeben ist, die einerseits an der Schaltwelle (3) und andererseits an dem Nocken (7) befestigt ist, wobei der Nocken (7) durch eine Drehung der Schaltwelle (3) in eine Drehrichtung durch die Torsionsfeder (8) von dem Freigabezustand in den gesperrten Zustand überführbar ist, wobei der Nocken (7) durch die Schaltwelle (3) in die entgegengesetzte Drehrichtung mittels eines an der Schaltwelle (3) angeordneten Anschlags (18) von dem gesperrten Zustand in den Freigabezustand überführbar ist,
**dadurch gekennzeichnet, dass**
an der Innenseite des Getriebegehäuses (2) eine aus einer Stahllegierung hergestellte Platte (10) angeordnet ist, welche zwischen dem Nocken (7) und der Innenseite des Getriebegehäuses (2) angeordnet ist und dem Nocken gegenüberliegt, so dass bei einer Drehung des Nockens (7) der Nocken (7) die Platte (10) berührt, indem sich der Nocken auf der Platte 10 abwälzt, ohne das Getriebegehäuse 2 zu berühren.

2. Getriebe nach Anspruch 1, wobei der Nocken (7) im gesperrten Zustand eine Sperrklinke (12) beaufschlagt und in eine Ausnehmung (13) des Parksperrenrads (14) drückt.

3. Getriebe nach Anspruch 2, wobei in dem Fall, wenn die Sperrklinke (12) nicht einer Ausnehmung (13) des Parksperrenrads (14) gegenüberliegt, ein von der Schaltwelle übertragenes Drehmoment als potenzielle Energie in der Torsionsfeder (8) gespeichert wird, wobei die Sperrklinke (12) bei einer weiteren Drehung des Parksperrenrads (14) in die Ausnehmung (13) des Parksperrenrads (14) gedrückt wird.

4. Getriebe nach einem der vorangehenden Ansprüche, wobei der Nocken (7) eine an den Außendurchmesser der Schaltwelle (3) angepasste Durchgangsöffnung (16) aufweist.

5. Getriebe nach einem der vorangehenden Ansprüche, wobei die Schaltwelle (3) durch ein Gleitlager oder ein Wälzlager am oder im Getriebegehäuse (2) gelagert ist.

6. Getriebe nach einem der vorangehenden Ansprüche, wobei die Schaltwelle (3) gegenüber dem Getriebegehäuse (2) durch ein Dichtungselement (6) abgedichtet ist.

7. Getriebe nach einem der vorangehenden Ansprüche, wobei die Schaltwelle (3) mit ihrem dem Antriebsmotor (4) entgegengesetzten freien Ende im Getriebegehäuse (2) gelagert ist.

8. Antriebseinrichtung für ein elektrisch antreibbares Kraftfahrzeug, umfassend
- eine elektrische Maschine,
- ein mit der elektrischen Maschine gekoppeltes Getriebe nach einem der Ansprüche 1 bis 7.

## Claims

1. Transmission having a parking brake (1, 19, 24) and a transmission housing (2) for a motor vehicle, having a movable locking means for impinging a parking brake wheel (14) disposed in the interior of the transmission housing (2) with a holding force, wherein the movable locking means is pivotable between a releasing state, in which the parking lock wheel (14) is rotatable, and a blocked state, in which rotation of the parking lock wheel (14) is blocked, by means of a shifting shaft (3) which is rotatable by a drive motor (4) and a cam (7) which is coupled to the shifting shaft (3), wherein the drive motor (4) is disposed outside the transmission housing (2), the shifting shaft (3) penetrates the transmission housing (2), and the cam (7) is disposed within the transmission housing (2), wherein the shifting shaft (3) is surrounded by a torsion spring (8) which on one side is fastened to the shifting shaft (3) and on the other side to the cam (7), wherein the cam (7) in a rotation direction is transferable by rotating the shifting shaft (3) from the releasing state to the blocked state by the torsion spring (8), wherein the cam (7) in the opposite rotation direction is transferable by the shifting shaft (3) from the blocked state to the releasing state by means of a detent (18) disposed on the shifting shaft (3),
**characterized in that**
disposed on the inside of the transmission housing (2) is a plate (10) which is produced from a steel alloy, is disposed between the cam (7) and the inside of the transmission housing (2) and lies opposite the cam in such a way that in a rotation of the cam (7) the cam (7) contacts the plate (10) **in that** the cam rolls on the plate (10) without contacting the transmission housing (2) .

2. Transmission according to Claim 1, wherein the cam (7) in the blocked state impinges a blocking latch (12) and pushes the latter into a recess (13) of the parking lock wheel (14).

3. Transmission according to Claim 2, wherein, in the event that the blocking latch (12) does not lie opposite a recess (13) of the parking lock wheel (14), a torque transmitted by the shifting shaft is stored as potential energy in the torsion spring (8), wherein the blocking latch (12) in a further rotation of the parking lock wheel (14) is pushed into the recess (13) of the parking lock wheel (14).

4. Transmission according to one of the preceding claims, wherein the cam (7) has a passage opening (16) that is adapted to the external diameter of the shifting shaft (3).

5. Transmission according to one of the preceding claims, wherein the shifting shaft (3) is mounted on or in the transmission housing (2) by a friction bearing or a roller bearing.

6. Transmission according to one of the preceding claims, wherein the shifting shaft (3) is sealed by a sealing element (6) in relation to the transmission housing (2).

7. Transmission according to one of the preceding claims, wherein the shifting shaft (3) is mounted in the transmission housing (2) by way of the free end of said shifting shaft that lies opposite the drive motor (4).

8. Drive installation for an electrically drivable motor vehicle, comprising
- an electric machine,
- a transmission according to one of Claims 1 to 7, which is coupled to the electric machine.

## Revendications

1. Transmission avec un verrou de stationnement (1, 19, 24) et un carter de transmission (2) pour un véhicule automobile, avec un moyen d'arrêt mobile pour solliciter une roue de verrou de stationnement (14) agencée à l'intérieur du carter de transmission (2) avec une force de retenue, le moyen d'arrêt mobile pouvant pivoter, au moyen d'un arbre de commutation (3) pouvant être tourné par un moteur d'entraînement (4) et d'une came (7) couplée à l'arbre de commutation (3), entre un état de libération, dans lequel la roue de verrou de stationnement (14) peut tourner, et un état verrouillé, dans lequel une rotation de la roue de verrou de stationnement (14) est bloquée, le moteur d'entraînement (4) étant agencé à l'extérieur du carter de transmission (2), l'arbre de commutation (3) traversant le carter de transmission (2) et la came (7) étant agencée à l'intérieur du carter de transmission (2), l'arbre de commutation (3) étant entouré par un ressort de torsion (8) qui est fixé d'une part à l'arbre de commutation (3) et d'autre part à la came (7), la came (7) pouvant être transférée de l'état de libération à l'état verrouillé par une rotation de l'arbre de commutation (3) dans une direction de rotation par le ressort de torsion (8), la came (7) pouvant être transférée de l'état verrouillé à l'état de libération par l'arbre de commutation (3) dans la direction de rotation opposée au moyen d'une butée (18) agencée sur l'arbre de commutation (3), **caractérisée en ce**
**qu'**une plaque (10) réalisée en un alliage d'acier est agencée sur le côté intérieur du carter de transmission (2), laquelle est agencée entre la came (7) et le côté intérieur du carter de transmission (2) et fait face à la came, de telle sorte que lors d'une rotation de la came (7), la came (7) touche la plaque (10) par le fait que la came roule sur la plaque (10) sans toucher le carter de transmission (2).

2. Transmission selon la revendication 1, dans laquelle la came (7) sollicite un cliquet de verrouillage (12) à l'état verrouillé et le pousse dans un évidement (13) de la roue de verrouillage de stationnement (14).

3. Transmission selon la revendication 2, dans laquelle, dans le cas où le cliquet de verrouillage (12) ne fait pas face à un évidement (13) de la roue de verrouillage de stationnement (14), un couple transmis par l'arbre de commutation est stocké sous forme d'énergie potentielle dans le ressort de torsion (8), le cliquet de verrouillage (12) étant poussé dans l'évidement (13) de la roue de verrouillage de stationnement (14) lors d'une rotation supplémentaire de la roue de verrouillage de stationnement (14).

4. Transmission selon l'une quelconque des revendications précédentes, dans laquelle la came (7) présente une ouverture de passage (16) adaptée au diamètre extérieur de l'arbre de commutation (3).

5. Transmission selon l'une quelconque des revendications précédentes, dans laquelle l'arbre de commutation (3) est monté sur ou dans le carter de transmission (2) par un palier lisse ou un palier à roulement.

6. Transmission selon l'une quelconque des revendications précédentes, dans laquelle l'arbre de commutation (3) est rendu étanche par rapport au carter de transmission (2) par un élément d'étanchéité (6).

7. Transmission selon l'une quelconque des revendications précédentes, dans laquelle l'arbre de commutation (3) est monté dans le carter de transmission (2) par son extrémité libre opposée au moteur d'entraînement (4).

8. Dispositif d'entraînement pour un véhicule automobile à propulsion électrique, comprenant
- une machine électrique,
- une transmission selon l'une quelconque des revendications 1 à 7, couplée à la machine électrique.
